# EUROPÄISCHE PATENTSCHRIFT

(11) **EP 0 741 904 B1**
(45) Veröffentlichungstag und Bekanntmachung des Hinweises auf die Patenterteilung: **25.03.1998**
(21) Anmeldenummer: 95906248.0
(22) Anmeldetag: 18.01.1995
(51) Int. Cl.: G21C 19/07, G21F 5/012

(54) **LAGERKORB ZUR LAGERUNG UND ZUM TRANSPORT VON BRENNELEMENTEN**
FUEL-ELEMENT STORAGE AND TRANSPORT RACK
PANIER DE STOCKAGE ET DE TRANSPORT D'ELEMENTS COMBUSTIBLES

(30) Priorität: 26.01.1994 DE 4402218
(43) Veröffentlichungstag der Anmeldung: 13.11.1996
(73) Patentinhaber: SIEMENS AKTIENGESELLSCHAFT, 80333 München (DE)
(72) Erfinder: WASINGER, Karl, D-63165 Mühlheim am Main (DE)
(86) Internationale Anmeldenummer: DE9500066
(87) Internationale Veröffentlichungsnummer: WO9520817

(56) Entgegenhaltungen:
- EP-A- 0 082 317
- EP-A- 0 158 849
- EP-A- 0 385 186
- DE-A- 2 840 594

## Beschreibung

Die Erfindung betrifft einen Lagerkorb zur Lagerung und zum Transport einer Mehrzahl von Brennelementen, insbesondere von Brennelementen, die in einem Kernreaktor eingesetzt waren zur Freisetzung von Energie durch Atomkernspaltung in spaltbarem Material, welches in den Brennelementen enthalten ist.

Sowohl die Lagerung als auch der allfällig notwendige Transport von Brennelementen, insbesondere von Brennelementen nach ihrem Einsatz in einem Kernreaktor, erfordert eine Fülle von Maßnahmen, die sich aus Gründen des Strahlenschutzes, der Notwendigkeit der Abfuhr von Wärme, die von radioaktiven Zerfällen in den Brennelementen herrührt, sowie der Forderung nach Ausschluß der Bildung einer Ansammlung spaltbaren Materials, in der eine sich selbst erhaltende Kettenreaktion von Atomkernspaltungen auftreten könnte, ergibt.

Der erstgenannte Grund erfordert eine sorgfältige Abschirmung eines bestrahlten Brennelements, der zweitgenannte Grund verlangt besondere Maßnahmen zur Wärmeabfuhr, und der drittgenannte Grund erfordert, daß eine Vielzahl von Brennelementen stets nur mit einer angemessenen Menge von neutronenabsorbierendem Material auf engem Raum zusammengebracht wird.

Aus der DE-PS 32 21 810 geht eine Einrichtung zum Lagern bestrahlter Brennelemente hervor, die in einem Kernkraftwerk in der Nähe des Kernreaktors und im Inneren des den Kernreaktor umgebenden Schutzschildes angeordnet werden soll. Die Einrichtung umfaßt ein mit leichtem Wasser gefülltes Lagerbecken und ein in diesem Lagerbecken angeordnetes Gestell, in dem die bestrahlten Brennelemente gelagert werden können. Das Gestell hat eine Bodenplatte, auf der Hülsen aus borhaltigem Stahl in einer Anordnung nach Art einer Bienenwabe angebracht sind. Jede Hülse dient zur Aufnahme eines Brennelementes. Die Abschirmung der Brennelemente ist insbesondere durch Wasser gewährleistet. Das Wasser dient auch zusammen mit dem Material der Hülsen zur Absorption von Neutronen, um den Aufbau einer Kettenreaktion sicher auszuschließen.

Aus der DE-OS 34 00 929 gehen ein Verfahren und ein Lager zum Behandeln von verbrauchten Brennelementen aus Kernkraftwerken hervor. Demnach werden Brennelemente, die aus einem Kernkraftwerk entfernt werden sollen, im Inneren des Schutzschildes des Kernreaktors in Büchsen dicht eingeschlossen. Nur dicht verschlossene und gegebenenfalls äußerlich dekontaminierte Büchsen werden aus dem Schutzschild herausgebracht und in einem externen Lager, welches mit einer Luftkühlung zur Abfuhr von Wärmeenergie aus den Brennelementen ausgestattet ist, gelagert.

Die DE-OS 28 40 594 betrifft wie die DE-PS 32 21 810 ein Lagergestell für Brennelemente zur Anordnung in einem Wasserbecken, welches aus Gestellteilen zusammengesetzt wird, die nebeneinander und gegebenenfalls auch übereinander angeordnet werden. Ein Gestellteil hat am Rand seines Querschnitts Vorsprünge und Ausnehmungen, die mit entsprechenden Ausnehmungen oder Vorsprüngen in benachbarten Gestellteilen zusammenpaßbar sind und insbesondere Stützflächen zwischen den Gestellteilen bilden. Das aus den Gestellteilen, die insbesondere nach Art von Bierkästen gestapelt werden, gebildete Gestell kann nicht nur vertikal wirkende, sondern auch horizontal wirkende Kräfte aufnehmen.

In der EP 0 385 186 A1 ist ein Brennelement-Lagergestell mit einem äußeren Rahmen beschrieben, der an seinem oberen Ende Transportösen aufweist und an seinem unteren Ende eine horizontale Stützplatte umfaßt. In dem äußeren Rahmen sind vertikale Rohre angeordnet, die eine Bodenplatte aufweisen, mit der sie an der Stützplatte befestigt sind. Die vertikalen Wandflächen der Rohre verlaufen zueinander und zu dem äußeren Rahmen parallel. Für den Durchtritt von Kühlwasser weisen die Bodenplatten oder die vertikalen Wandflächen Durchbrechungen auf, zu denen entsprechende Durchbrechungen in dem äußeren Rahmen korrespondieren. Die Transportösen dienen dazu, das Lagergestell mittels eines Hebezeuges in ein vorgesehenes Brennelement-Lagerbecken einzuheben und dort zu positionieren.

Die EP-A-0 082 317 gibt ein Brennelement-Lagergestell mit einer Grundplatte an, wobei an der Grundplatte senkrecht zu dieser verlaufende Zellen zur Aufnahme von Brennelementen befestigt sind. Die Grundplatte enthält für jede Zelle eine Öffnung für den Eintritt von Kühlflüssigkeit. Um das Lagergestell nach seinem Zusammenbau an die vorgesehene Stelle in einem Brennelement-Lagerbecken zu heben, ist ein Teil der Öffnungen so ausgebildet, daß eine Vorrichtung zum Heben des Lagergestells in diese eingreifen kann. Mit der Vorrichtung kann das Lagergestell und die darin ausschließlich vertikal zur Grundplatte angeordneten Brennelemente innerhalb des Brennelement-Lagerbeckens in verschiedene Positionen eingehoben werden.

Mit den bekannten Lager- und Transportmöglichkeiten für Brennelemente ist stets die Notwendigkeit verbunden, Brennelemente gegebenenfalls einzeln von einer ersten Lagereinrichtung in eine zweite Lagereinrichtung, beispielsweise von einem Gestell in einen Transportbehälter, umladen zu müssen. Aufgrund der besonderen Anforderungen, die an die Handhabung solcher Brennelemente zu stellen sind, bedeutet dies, daß die Handhabung stets nur in besonders abgeschirmter Umgebung erfolgen darf. Auch ergibt sich ein recht hoher und nicht zuletzt aus Strahlenschutzgründen höchst unerwünschter Aufwand, da für jeden Umladevorgang einzelne Brennelemente bewegt werden müssen.

Der vorliegenden Erfindung liegt die Aufgabe zugrunde eine Möglichkeit zu schaffen, den Aufwand beim Umlagern von Brennelementen gegenüber den bisher bekannten Möglichkeiten wesentlich zu verringern.

Zur Lösung dieser Aufgabe wird erfindungsgemäß ein Lagerkorb zur Lagerung und zum Transport einer Mehrzahl von Brennelementen angegeben mit einer Grundplatte und einer Mehrzahl von auf der Grundplatte stehenden Hülsen, in deren jeder ein Brennelement lagerbar ist, bei dem
a) jeder Hülse zumindest eine Öffnung in der Grundplatte zur Zu- und Abführung von Kühlflüssigkeit zugeordnet ist, welche Öffnung in das Innere der Hülse hineinführt;
b) jede Hülse eine Mehrzahl von Schlitzen zur Zu- und Abführung von Kühlgas aufweist und
c) die Hülsen an zumindest einer Stützwand, welche mit der Grundplatte ein tragendes Teil des Lagerkorbes bildet, befestigt sind.

Der Lagerkorb kann einerseits mit einer Mehrzahl gleicher Lagerkörbe, versehen mit bestrahlten Brennelementen, in einem wassergefüllten Lagerbecken angeordnet werden, um Brennelemente unmittelbar neben einem Kernreaktor zu lagern. Damit der Lagerkorb problemlos aus dem Lagerbecken genommen werden kann, besitzt die Grundplatte Öffnungen, durch die ein Kühlmittel wie Wasser aus den Hülsen abfließen kann. Die Öffnungen dienen darüber hinaus der Ausbildung eines Naturumlaufs des Wassers an den Brennelementen entlang zu deren Kühlung. Weiterhin kann der Lagerkorb mit den Brennelementen in einen Transportbehälter eingebracht und darin verankert werden, um so einen problemlosen Transport der Gesamtheit der Brennelemente zu ermöglichen. Insbesondere hierfür hat der Lagerkorb die Stützwand, die alle zu erwartenden Belastungen aufnimmt, auch in dem Fall, daß der Lagerkorb zum Transport nicht auf der Grundplatte steht, sondern mit vertikal ausgerichteter Grundplatte liegt.

Um die in einem Transportbehälter üblicherweise praktizierte Gaskühlung der Brennelemente zu ermöglichen, ist jede Hülse mit einer Mehrzahl von Schlitzen versehen. Mithin wird eine Möglichkeit zur Lagerung, zur Umlagerung und zum Transport von Brennelementen geschaffen, die die Handhabung einzelner Brennelemente weitgehend vermeidet; nach Einbringen der Brennelemente in den Lagerkorb braucht stets nur noch der Lagerkorb als Ganzes bewegt zu werden.

Bevorzugtermaßen ist der Lagerkorb so ausgestaltet, insbesondere durch das Vorsehen geeigneter Ankermittel, daß er mit einer Mehrzahl gleicher Lagerkörbe bei horizontaler Ausrichtung aller Grundplatten zu einem Lagergestell verbindbar ist. Derartige Ankermittel können beispielsweise Nasen sein, die Bohrungen aufweisen und mittels Bolzen oder dergleichen mit benachbarten Lagerkörben, welche entsprechende Nasen aufweisen, verschraubbar sind. Auch sind Anordnungen von Riegeln und Haken denkbar, mittels derer einander benachbarte Lagerkörbe ineinander verhakbar sind.

Mit weiterem Vorzug ist der Lagerkorb mit einem anderen, gleichen Lagerkorb mit horizontaler Ausrichtung der Grundplatten stapelbar. Zusätzlich ist der Lagerkorb vorzugsweise so eingerichtet, daß er in einem dicht verschließbaren zugehörigen Behälter verankerbar ist, insbesondere zu Transportzwecken.

Weiterhin bevorzugt ist es, daß die Hülsen des Lagerkorbes aus einem neutronenabsorbierenden Material, vorzugsweise einem borhaltigen Material, insbesondere borhaltigem Stahl, bestehen. Da borhaltiger Stahl relativ spröde ist, erfordert er üblicherweise ein zusätzliches Stützmittel, um eine hinreichende Belastbarkeit des Lagerkorbes sicherzustellen. Hierzu dient die Stützwand.

Mit weiterem Vorzug bestehen die Grundplatte und die Stützwand aus einem nicht rostenden Stahl. Besonders vorteilhaft ist es, wenn jede Hülse des Lagerkorbes von einer zugeordneten Stützwand ummantelt ist. Ein solcher Lagerkorb hat keine freiliegenden Flächen aus sprödem Werkstoff, was im Hinblick auf die Belastbarkeit des Lagerkorbes besonders vorteilhaft ist.

Mit weiterem Vorteil bilden die Hülsen des Lagerkorbes eine etwa zylindrische Anordnung, um zum Transport des Lagerkorbes nach üblicher Art gestaltete, also im wesentlichen zylindrische Behälter verwenden zu können.

Es versteht sich, daß der Lagerkorb entsprechend den Anforderungen des jeweiligen Einzelfalls mit Befestigungselementen zum Anschlagen geeigneter Hebezeuge versehen ist, die mit weiterem Vorteil so ausgeführt sind, daß sie als Auflagen und Befestigungspunkte für einen weiteren Lagerkorb dienen, der auf den erstgenannten Lagerkorb gestellt werden soll. Auch sind derartige Befestigungselemente mit weiterem Vorteil so ausgeführt, daß sie zur Befestigung des Korbes in einem entsprechenden Transportbehälter dienen können. Zu diesem Zweck ist der Lagerkorb vorzugsweise auch mit seitlichen Abstützungen versehen, um den Lagerkorb mit geringem Spiel in einen Behälter zum Transport abzustützen, wobei bei dem Transport gegebenenfalls eine horizontale Lagerung des Behälters und der Brennelemente erforderlich ist.

Ausführungsbeispiele der Erfindung werden nunmehr anhand der Zeichnung näher erläutert. Zur Herausstellung bestimmter Merkmale ist die Zeichnung teilweise nach Art einer Skizze und/oder leicht verzerrt ausgeführt. In der Zeichnung zeigen im einzelnen:
- FIG 1: die Teilansicht eines Lagerkorbs;
- FIG 2: eine Ansicht zweier Hülsen aus einem Lagerkorb;
- FIG 3: einen Lagerkorb beim Einführen in einen Behälter;
- FIG 4: eine Mehrzahl von Lagerkörben, die zu einem Gestell gestapelt sind und
- FIG 5: ein Brennelement in einer Hülse des Lagerkorbes.

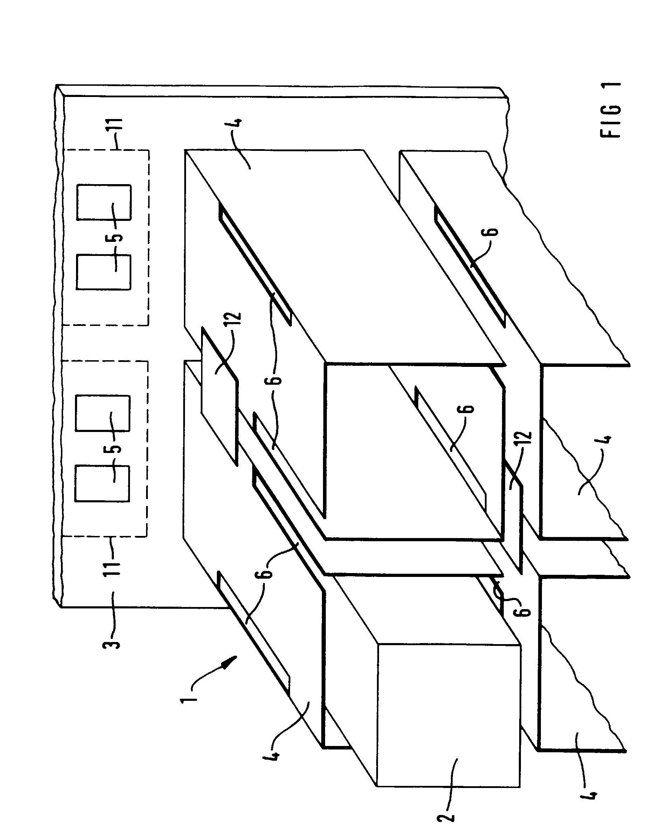

Figur 1 zeigt in Teilansicht einen Lagerkorb 1 mit einer Grundplatte 3, auf der mehrere rechteckige Hülsen 4 stehen. In einer der Hülsen 4 befindet sich ein durch einen Quarder symbolisiertes Brennelement 2. Die Hülsen 4 sind auf der Grundplatte 3 mit nicht dargestellten Mitteln befestigt, insbesondere verankert. Weitere Positionen 11 für nicht dargestellte Hülsen sind mit gestrichelten Linien dargestellt. Die Grundplatte 3 hat Öffnungen 5, die in die Hülsen 4 hineinführen und die es ermöglichen, daß aus den Hülsen 4 zuvor zugeführte Kühlflüssigkeit, insbesondere Wasser, ablaufen kann, wenn der Lagerkorb 1 aus einem wassergefüllten Lagerbecken herausgehoben wird. Jede Hülse 4 hat im Kantenbereich seitliche Schlitze 6, die die Zirkulation eines Kühlgases in dem Lagerkorb 1 zwischen dem Brennelement 2 und der Hülse 4 ermöglichen, wenn dieser zu Transportzwecken in einem (nicht gezeigten) Behälter liegt. Untereinander sind die Hülsen 4 mit Laschen 12 verbunden, wobei die Verbindung zwischen einer Hülse 4 und einer Lasche 12 insbesondere durch Schweißen hergestellt sein kann.

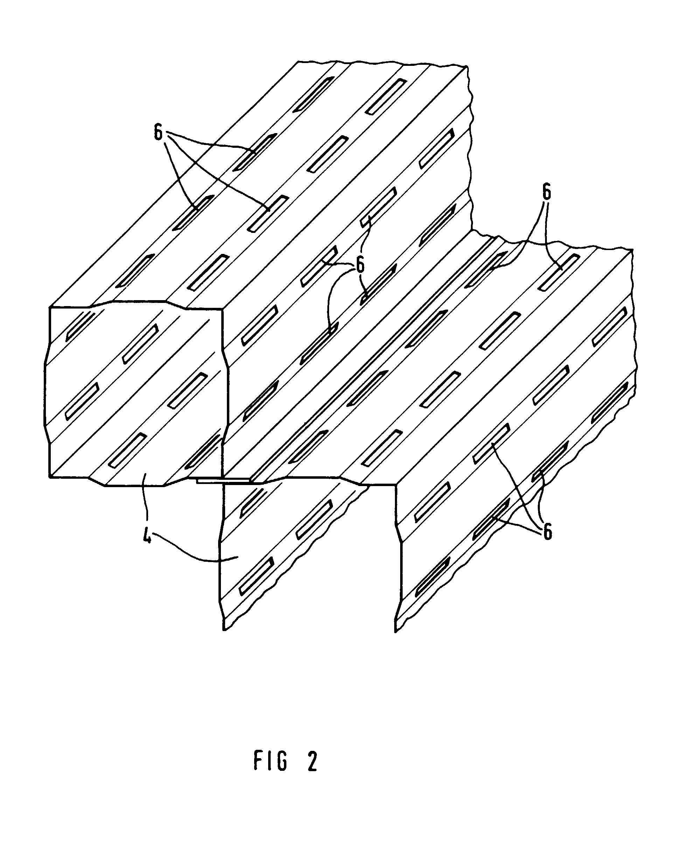

Figur 2 zeigt zwei Hülsen 4, die jeweils einen relativ aufwendig gestalteten im wesentlichen rechteckigen Querschnitt haben und deren jede mit einer Vielzahl von Schlitzen 6 versehen ist. Die Schlitze 6 sind hier in parallelen Reihen an den Seitenflächen der Hülsen 4 in Längsrichtung angeordnet. Die Gestalt der Hülsen 4 sowie Form, Anzahl und Anordnung der Schlitze 6 sind den Eigenschaften der Brennelemente 2, die in den Hülsen 4 gelagert werden sollen, anzupassen. Die Form, Anordnung und Anzahl der Schlitze 6 muß im Einzelfall bestimmt werden, insbesondere anhand der thermischen Wärmeleistung, die von dem in der jeweiligen Hülse 4 zu lagernden Brennelement 2 ausgeht und anhand der Kühlung, die dementsprechend für das betreffende Brennelement 2 vorgesehen sein muß.

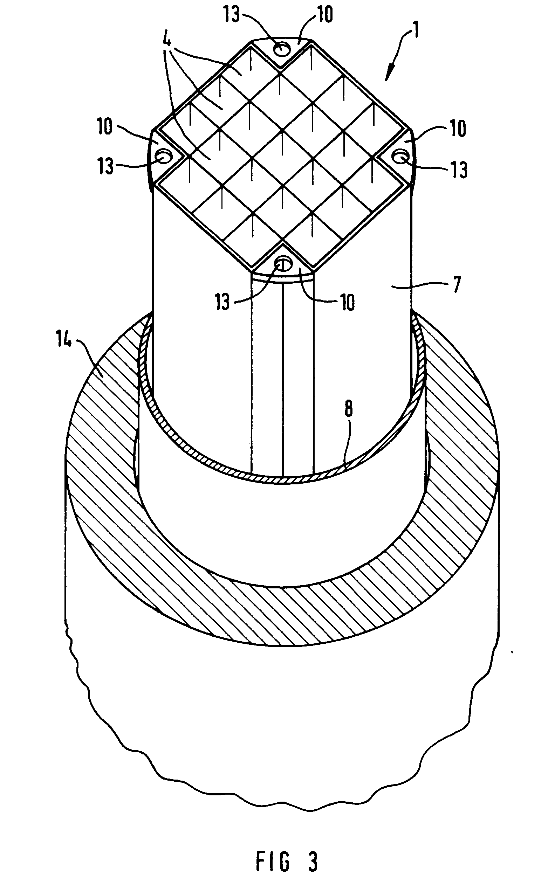

Figur 3 zeigt einen Lagerkorb 1, der eine Vielzahl von etwa rechteckigen Hülsen 4 in einer etwa zylindrischen Anordnung aufweist, die ihrerseits von einer Stützwand 7 umhüllt ist. Die Stützwand 7 bildet mit der (nicht dargestellten) Grundplatte ein tragendes Teil, welches insbesondere die Hülsen 4 trägt und alle Belastungen, denen der Lagerkorb 1 ausgesetzt wird, aufnehmen soll. Die Stützwand 7 hat Ecken, die in den Lagerkorb 1 hineinragen und in denen am Ende Ankerplatten 10 mit Bohrungen 13 angebracht sind. An den Ankerplatten 10 können mehrere Lagerkörbe 1 miteinander verbunden werden, außerdem kann an den Ankerplatten 10 ein entsprechendes Hebezeug angreifen. Aus Figur 3 weiterhin ist erkennbar, wie der Lagerkorb 1 in einen Behälter 8 eingeführt werden kann. Der Behälter 8 gehört zu einer zweiteiligen Anordnung und ist darin von einem Abschirmmantel 14 umgeben. Der Behälter (8) bzw. ein den Behälter 8 aufnehmender eigentlicher Transportbehälter ist dicht verschließbar, so daß von den in dem Lagerkorb 1 angeordneten (nicht dargestellten) Brennelementen ausgehende radioaktive Strahlung oder radioaktive Spaltprodukte nicht in die Umgebung gelangen können. Im konkreten Fall bildet der Abschirmmantel 14 einen Bestandteil eines Transportbehälters im eigentlichen Sinne, der ausgerüstet ist für Transporte von Brennelementen über öffentliche Verkehrswege.

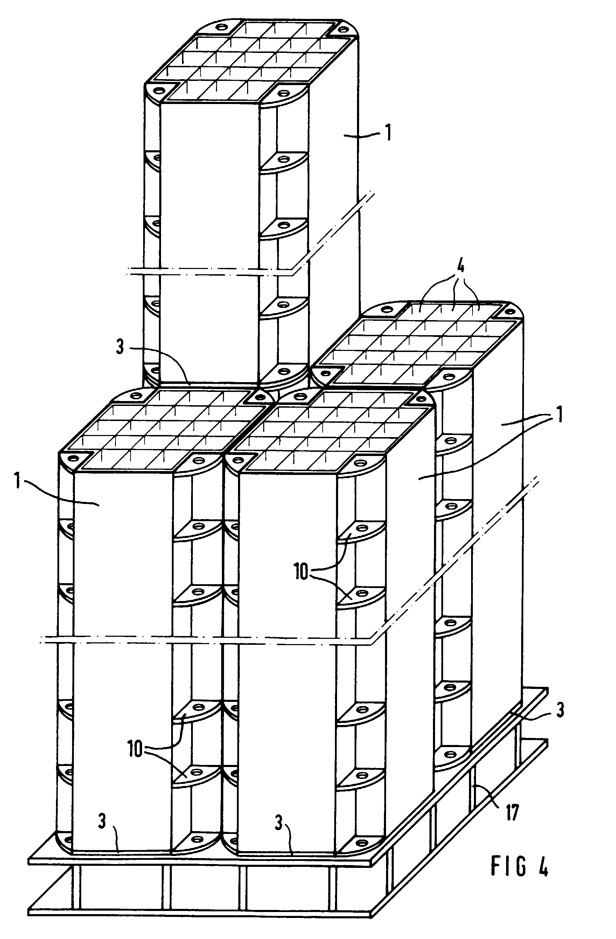

Figur 4 zeigt, wie eine Vielzahl (hier fünf) von Lagerkörben 1 zu einem Lagergestell für Brennelemente gestapelt werden können. Die dargestellten Lagerkörbe 1 entsprechen in ihrem Aufbau im wesentlichen dem Aufbau des Lagerkorbs 1 gemäß Figur 3, so daß insoweit auf Figur 3 verwiesen wird. Lediglich haben die Lagerkörbe 1 nach Figur 4 an jeder Ecke jeweils eine Vielzahl von übereinander angeordneten Ankerplatten 10. Die Lagerkörbe 1 können somit untereinander zu einem besonders stabilen Gestell verbunden oder in einem zugehörigen Behälter besonders sicher verankert werden. Vier der Lagerkörbe 1 sind nebeneinander auf einer Gestellplatte 17 angeordnet, wobei die Grundplatten 3 der Lagerkörbe 1 in einer Ebene liegen. Der fünfte Lagerkorb 1 ist auf einem der vier Lagerkörbe 1 aufgesetzt, so daß die unterste Schicht der Ankerplatten 10 des aufgesetzten Lagerkorbs 1 mit der obersten Schicht der Ankerplatten 10 des tragenden Lagerkorbs deckungsgleich sind. Hierdurch können einander berührende Ankerplatten 10 fest miteinander verbunden werden.

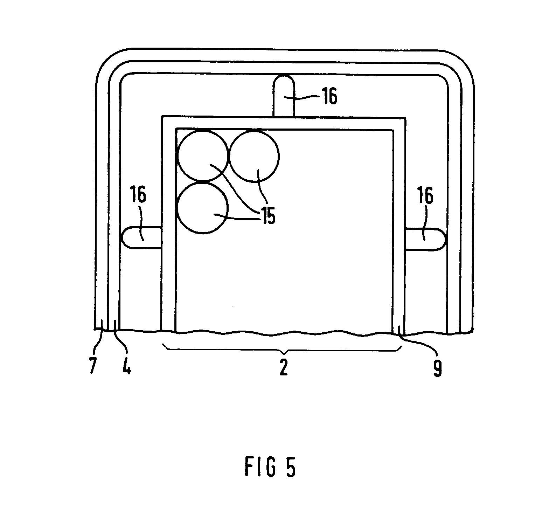

Figur 5 zeigt eine Hülse 4, deren Einbeziehung in einen erfindungsgemäßen Lagerkorb 1 besonders vorteilhaft ist. Die Hülse 4 gehört dabei zu einem zweischichtigen Aufbau und bildet dessen innere Schicht; die äußere Schicht des Aufbaus ist gegeben durch eine der Hülse 4 zugeordnete und mit dieser unmittelbar verbundene Stützwand 7. Ein Lagerkorb 1 mit solchen Hülsen 4, deren jede ihre eigene Stützwand 7 hat, ist besonders fest und kommt daher den Anforderungen, die zur Lagerung und zum Transport von Brennelementen 2 zu stellen sind, in besonderer Weise entgegen.

In Figur 5 ist auch ein spezieller Aufbau eines Brennelementes 2 skizziert. Das Brennelement 2 hat ein Rahmenteil 9, in dem Brennstäbe 15, deren jeder spaltbares Material enthält, befestigt sind. Das Rahmenteil 9 weist an seiner Außenseite Abstandshalter 16 auf, um es in der Hülse 4 (oder auch im Kernreaktor) stabil zu positionieren.

Der Lagerkorb jedweder Ausgestaltung ermöglicht die Lagerung und den Transport von Brennelementen aus einem Kernreaktor sowohl unter Wasser in einem üblichen Lagerbecken als auch unter Gas, insbesondere unter Schutzgas, in einem zum Transport über öffentliche Verkehrswege geeigneten Behälter. Der Aufwand beim Umlagern der Brennelemente ist gegenüber den bisher bekannten Möglichkeiten wesentlich verringert.

## Patentansprüche

1. Lagerkorb (1) zur Lagerung und zum Transport einer Mehrzahl von Brennelementen (2) mit einer Grundplatte (3) und einer Mehrzahl von auf der Grundplatte (3) stehenden Hülsen (4), in deren jeder ein Brennelement (2) lagerbar ist, bei dem
a) jeder Hülse (4) zumindest eine Öffnung (5) in der Grundplatte (3) zur Zu- und Abführung von Kühlflüssigkeit zugeordnet ist, welche Öffnung (5) in das Innere der Hülse (4) hineinführt;
b) jede Hülse (4) eine Mehrzahl von Schlitzen (6) zur Zu- und Abführung von Kühlgas aufweist;
c) die Hülsen (4) an zumindest einer Stützwand (7), welche mit der Grundplatte (3) ein tragendes Teil bildet, befestigt sind.

2. Lagerkorb (1) nach Anspruch 1, welcher mit einer Mehrzahl gleicher Lagerkörbe (1) bei horizontaler Ausrichtung aller Grundplatten (3) zu einem Lagergestell verbindbar ist.

3. Lagerkorb (1) nach Anspruch 2, welcher mit einem anderen, gleichen Lagerkorb (1) bei horizontaler Ausrichtung der Grundplatten (3) vertikal stapelbar ist.

4. Lagerkorb (1) nach Anspruch 2 oder 3, welcher in einem dicht verschließbaren Behälter (8) verankerbar ist.

5. Lagerkorb (1) nach einem der vorhergehenden Ansprüche, bei dem die Hülsen (4) aus einem neutronenabsorbierenden Material, vorzugsweise einem borhaltigen Material, insbesondere borhaltigem Stahl, bestehen.

6. Lagerkorb (1) nach einem der vorhergehenden Ansprüche, bei dem die Grundplatte (3) und die Stützwand (7) aus einem nicht rostenden Stahl bestehen.

7. Lagerkorb (1) nach einem der vorhergehenden Ansprüche, bei dem jede Hülse (4) von einer zugeordneten Stützwand (7) ummantelt ist.

8. Lagerkorb (1) nach einem der vorhergehenden Ansprüche, bei dem die Hülsen (4) eine etwa zylindrische Anordnung bilden.

## Claims

1. Storage cage (1) for the storage and transport of a plurality of fuel elements (2), with a baseplate (3) and with a plurality of casings (4) which stand on the baseplate (3) and in each of which a fuel element (2) can be stored, wherein
a) each casing (4) is assigned at least one aperture (5) in the baseplate (3) for the supply and discharge of cooling liquid, said aperture (5) leading into the interior of the casing (4);
b) each casing (4) has a plurality of slots (6) for the supply and discharge of cooling gas;
c) the casings (4) are fastened to at least one supporting wall (7) which forms with the baseplate (3) a load-bearing part.

2. Storage cage (1) according to Claim 1, which can be connected to a plurality of identical storage cages (1), with all the baseplates (3) being oriented horizontally, to form a storage rack.

3. Storage cage (1) according to Claim 2, which can be stacked vertically with another identical storage cage (1), with the baseplates (3) being oriented horizontally.

4. Storage cage (1) according to Claim 2 or 3, which can be anchored in a sealingly closeable container (8).

5. Storage cage (1) according to one of the preceding claims, wherein the casings (4) consist of a neutron-absorbing material, preferably of a boron-containing material, in particular boron-containing steel.

6. Storage cage (1) according to one of the preceding claims, wherein the baseplate (3) and the supporting wall (7) consist of a rust-resistant steel.

7. Storage cage (1) according to one of the preceding claims, wherein each casing (4) is shrouded by an associated supporting wall (7).

8. Storage cage (1) according to one of the preceding claims, wherein the casings (4) form an approximately cylindrical arrangement.

## Revendications

1. Panier de stockage (1) destiné au stockage et au transport de plusieurs assemblages combustibles (2), comportant une plaque de base (3) et plusieurs gaines (4) dressées sur la plaque de base (3), un assemblage combustible (2) pouvant être logé dans chacune de ces gaines, dans lequel
a) il est associé à chaque gaine (4) au moins un orifice (5) de la plaque de base (3) pour l'amenée et l'évacuation de liquide de refroidissement, lequel orifice (5) débouche à l'intérieur de la gaine (4) ;
b) chaque gaine (4) comporte plusieurs fentes (6) pour l'amenée et l'évacuation de gaz de refroidissement ; et
c) les gaines (4) sont fixées sur au moins une paroi de soutien (7) qui forme avec la plaque de base (3) un élément porteur.

2. Panier de stockage (1) selon la revendication 1, qui peut être relié, pour former un râtelier de stockage, avec plusieurs paniers de stockage (1) identiques ayant tous leurs plaques de base (3) orientées horizontalement.

3. Panier de stockage (1) selon la revendication 2, qui peut être empilé verticalement avec un autre panier de stockage (1) identique lorsque les plaques de base (3) sont orientées horizontalement.

4. Panier de stockage (1) selon la revendication 2 ou 3, qui peut être arrimé dans un conteneur (8) pouvant être fermé hermétiquement.

5. Panier de stockage (i) selon l'une quelconque des revendications précédentes, dans lequel les gaines (4) sont constituées d'un matériau absorbant les neutrons, de préférence d'un matériau à teneur en bore, notamment d'acier au bore.

6. Panier de stockage (1) selon l'une quelconque des revendications précédentes, dans lequel la plaque de base (3) et la paroi de soutien (7) sont constituées d'un acier inoxydable.

7. Panier de stockage (1) selon l'une quelconque des revendications précédentes, dans lequel chaque gaine (4) est entourée d'une paroi de soutien (7) associée.

8. Panier de stockage (1) selon l'une quelconque des revendications précédentes, dans lequel les gaines (4) forment un ensemble sensiblement cylindrique.
